# EUROPÄISCHE PATENTSCHRIFT

(11) **EP 0 685 919 B1**
(45) Veröffentlichungstag und Bekanntmachung des Hinweises auf die Patenterteilung: **31.03.1999**
(21) Anmeldenummer: 94108344.6
(22) Anmeldetag: 31.05.1994
(51) Int. Cl.: H02J 3/01

(54) **Elektronischer Strom-Oberschwingungskompensator**
Electronic harmonics compensator
Système électronique de suppression des harmoniques

(43) Veröffentlichungstag der Anmeldung: 06.12.1995
(73) Patentinhaber: FACHHOCHSCHULE KONSTANZ, D-78462 Konstanz (DE)
(72) Erfinder: Bystron, Klaus, Prof. Dr-Ing, D-88682 Salem-Beuren (DE)
(74) Vertreter: Behrmann, Niels, Dipl.-Ing.

(56) Entgegenhaltungen:
- US-A- 5 287 288
- APEC'93, EIGHTH ANNUAL APPLIED POWER ELECTRONICS CONFERENCE AND EXPOSITION, MARCH 7-11, 1993 , SPONSORED BY THE IEEE POWER ELECTRONICS SOCIETY, SAN DIEGO, CALIFORNIA, US Seiten 841 - 846 C. QUINN ET AL. 'A Four-Wire, Current-Controlled Converter Provides Harmonic Neutralization in Three-Phase, Four-Wire Systems'

## Beschreibung

Die Erfindung betrifft einen elektronischen Strom-Oberschwingungskompensator für den Einsatz in Stromoberschwingungen erzeugenden Geräten und elektrischen Einrichtungen nach dem Oberbegriff des Patentanspruches 1.

Der Strom-Oberschwingungskompensator besteht - in einphasiger Ausführung - etwa aus einem Kondensator, vier gesteuerten Stromrichterventilen mit gegenparallel geschalteten Dioden, einer Drosselspule zur Stromeinprägung sowie einer Steuer- und Regeleinrichtung.

Stromoberschwingungen bewirken elektromagnetische Störungen und führen im öffentlichen Netz aufgrund der endlichen Kurzschlußleistung des Netzes zu Spannungsoberschwingungen, die bei einer Reihe von Verbrauchern eine erhebliche Reduzierung der Lebensdauer nach sich ziehen kann,

Der elektronische Strom-Oberschwingungskompensator speist am Anschlußpunkt einer Stromoberschwingungen erzeugenden Einrichtung die invertierte Summe der von der Einrichtung erzeugten Stromoberschwingungen ein, so daß in das Netz nur der Grundschwingungsstrom fließt.

Bekannte Einrichtungen ähnlicher Funktion arbeiten mit umfangreichen rechner- und mikrocomputerunterstützten Steuer- und Regeleinrichtungen, so daß diese Systeme nur für große Leistungen wirtschaftlich arbeiten können.

So ist etwa aus Quinn-Mohan, "A Four-Wire, Current-Controlled Converter Provides Harmonic Neutralization in Three-Phase, Four-Wire Systems", APEC'93, Seiten 841 bis 846, ein gattungsgemäßer Strom-Oberschwingungskompensator bekannt, der dreiphasig ausgebildet ist. Insbesondere im Hinblick auf das Einschwingverhalten bei vorhandenen Oberschwingungen ist jedoch die insbesondere im Zusammenhang mit Fig. 1 bzw. Fig. 2 dieser Druckschrift offenbarte Vorrichtung nachteilig, da der Referenzstrom mittels einer Bandsperre erzeugt wird, wodurch im Einschwingzyklus undefinierte Zustände vorliegen.

Aufgabe der vorliegenden Erfindung ist es daher, einen gattungsgemäßen Strom-Oberschwingungskompensator insbesondere im Hinblick auf das Einschwingverhalten zu verbessern und dies zudem mit nur geringem schaltungstechnischen Aufwand zu realisieren.

Die Aufgabe wird durch den elektrischen Strom-Oberschwingungskompensator mit den Merkmalen des Patentanspruches 1 gelöst.

Vorteilhafte Weiterbildungen der Erfindung sind in den Unteransprüchen beschrieben.

Das der Erfindung zugrundeliegende Schaltungsprinzip ist auch unabhängig von der Oberschwingungsleistung (Verzerrungsleistung). Die äußerst einfache Schaltungsanordnung ermöglicht unter Verwendung handelsüblicher Bauelemente bei sehr geringen Verlusten in weiten Leistungsbereichen eine wirtschaftliche Kompensationsmethode.

Weitere Vorteile, Merkmale und Einzelheiten der Erfindung ergeben sich aus den Zeichnungen, in denen die Wirkungsweise des Strom-Oberschwingungskompensators veranschaulicht wird:
Fig. 1 zeigt das Blockschaltbild des Strom-Oberschwingungskompensators sowie eine elektrische Einrichtung im Erzeugerbetrieb, die Stromoberschwingungen in das öffentliche Netz einspeist.
Fig. 2 zeigt exemplarisch die Konfiguration des Leistungsteils des Strom-Oberschwingungskompensators und
Fig. 3 verdeutlicht am Signal-Zeitdiagramm die Erzeugung des Verluststroms i_{V(t)} im eingeschobenen Zustand.

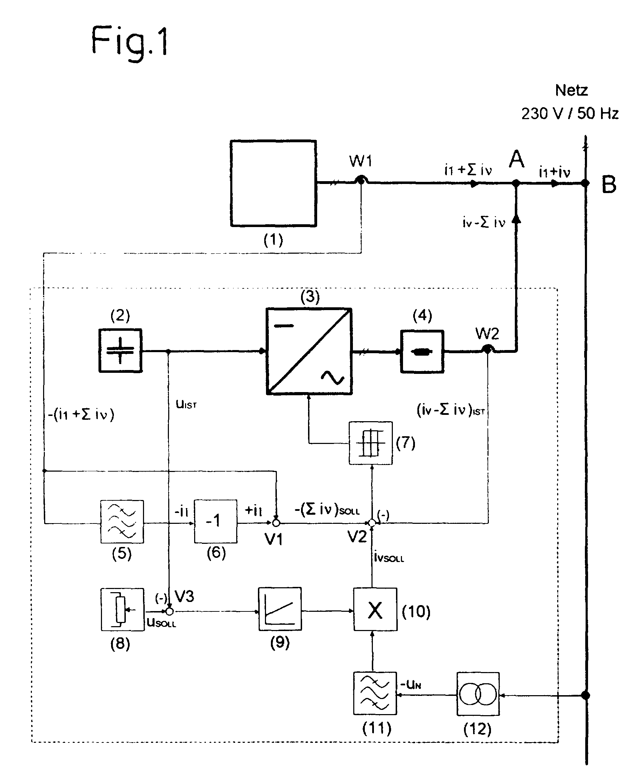

In Figur 1 ist eine elektrische Einrichtung im Erzeugerbetrieb (1) dargestellt, deren Strom neben der Grundschwingung i₁ eine Anzahl von Stromoberschwingungen Σ*i*ν enthält, die an der Anschlußstelle A vom Strom-Oberschwingungskompensator kompensiert werden.

Der Leistungsteil des Strom-Oberschwingungskompensators besteht aus dem Kondensator (2), dem in Brückenschaltung geschalteten, mit hoher Frequenz taktenden selbstgeführten Stromrichter (3) sowie der Drosselspule (4) für die Stromeinprägung.
Die mit (5) bis (12) bezeichneten Netzwerke ermöglichen die Steuerung und Regelung des Strom-Oberschwingungskompensators.

Eine Kompensation der Oberschwingungsströme am 230 V-, 50 Hz-Netz ist ohne Zwischenschaltung eines Transformators nur möglich, wenn die Kondensatorspannung unter Berücksichtigung des Spannungsabfalls im Leistungskreis mindestens (350 - 400) V beträgt. Zur Ladung des Kondensators (2) dienen die Netzwerke (7) bis (12). Zur weiteren Erklärung wird für den Strom-Oberschwingungskompensator das Erzeuger- und für das Netz das Verbraucher-Zählpfeilsystem zugrunde gelegt. An der Vergleichsstelle V3 wird der Istwert der Kondensatorspannung von dem Sollwert subtrahiert und die Differenz dem Pl-Regler (9) zugeführt. Der Ausgang des Pl-Reglers (9) gelangt auf einen Eingang des Multiplizierers (10). Auf den zweiten Eingang des Multiplizierers (10) wird eine um 180 ° zur Netzspannung phasenverschobene Wechselspannung geschaltet. Diese wird oberschwingungsfrei in der erforderlichen Höhe aus der Netzspannung mit Hilfe des Übertragers (12) und des selektiven Filters (11) erzeugt. Der Multiplizierer (10) bildet somit an seinem Ausgang einen vom Pl-Regler (9) gesteuerten, zur Netzspannung gegenphasigen, Stromsollwert iᵥₛₒₗₗ. Dieser wird an der Additionsstelle V2 zu dem vom Stromwandler W2 gebildeten negierten Istwert addiert. Die Differenz wird dem Zweipunktregler (Schmitt-Trigger) (7) zugeführt, der mit seinem Ausgang die Ventile des Stromrichters (3) so schaltet, daß der Stromistwert nur kleine, von der Hysterese des Zweipunktreglers (7) abhängige, positive und negative Abweichungen von der vorgegebenen Sinusform hat. Die Schaltfrequenz der Stromrichterventile (20-50) kHz hängt von der Höhe der Kondensatorspannung, der Hysterese des Zweipunktreglers (7) und der Induktivität der Drosselspule (4) ab. Die Amplitude des Stromsollwertes ist nur von den Verlusten der Schaltung abhängig. Durch die beschriebene Regeleinrichtung kann demnach eine vorgegebene Kondensatorspannung (z.B. 400 V) eingestellt und bei Kompensationsbetrieb konstant gehalten werden.

Nachfolgend wird die Strom-Oberschwingungokompensation erläutert. Der Stromistwert i₁ + Σ*i*ν der Stromoberschwingungen erzeugenden Einrichtung (1) wird von dem Stromwandler W1 erfaßt und als negierte proportionale Spannung dem selektiven Filter (5) höherer Ordnung (z. B. 4. Ordnung) zugeleitet. Das auf die Netzfrequenz abgestimmte selektive Filter (5) unterdrückt die Oberschwingungen und bildet am Ausgang eine Spannung, die ohne Phasenverschiebung mit hoher Genauigkeit der negierten Grundschwingung des Stromes entspricht. Nach Invertierung (6) wird dieses Signal an der Additionsstelle V1 zu der dem negierten Gesamtstrom - (i₁ + Σ*i*ν) entsprechenden Spannung addiert. Das Ergebnis ist eine Spannung, die der negierten Summe der Oberschwingungsstöme - Σ*i*ν entspricht. Dieser Wert wird als Stromsollwert (-Σ*i*ν)ₛₒₗₗ ebenso wie der entsprechende Istwert, der vom Stromwandler W2 gebildet und invertiert wird, der Additionsstelle V2 zugeführt. An der Additionsstelle V2 wird demnach der Summensollwert aus i_{Vsoll} und (-Σ*i*ν)ₛₒₗₗ mit dem von demselben Wandler W2 gebildeten Summenistwert verglichen. Die Soll-lstwertdifferenz bildet das Eingangssignal für den Zweipunktregler (7), der mit seinem Ausgang die Ventile des Stromrichters so ansteuert, daß der Stromistwert bis auf kleine, von der Hysterese des Zweipunktreglers (7) abhängige Abweichungen der Summe der Sollwerte aus i_{Vsoll} und (-Σ*i*ν)ₛₒₗₗ folgt.

An der Anschlußstelle A des Strom-Oberschwingungskompensators wird dieser eingeprägte Strom eingespeist. Die Stromoberschwingungen der Einrichtung (1) werden neutralisiert, und in das Netz fließt nur der Grundschwingungsstrom i₁, vermindert um den Verluststrom i_{V} = - îᵥ sin(ωt).

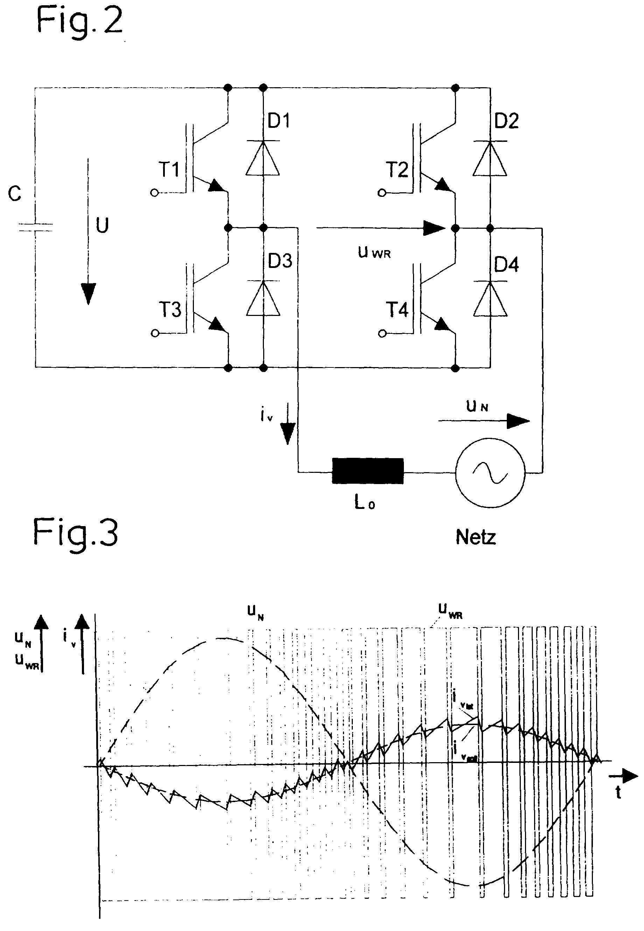

Fig. 2 zeigt exemplarisch die Konfiguration des Leistungsteils des Strom-Oberschwingungskompensators, die Bildung des Verluststromes iᵥ(t) im eingeschwungenen Zustand.

## Patentansprüche

1. Elektrischer Strom-Oberschwingungskompensator für ein Versorgungsnetz, bestehend aus einem Kondensator (2), einem selbstgeführten Stromrichter (3) und einer Drosselspule (4), wobei ein in der Drosselspule eingeprägter Strom einer invertierten Summe der Stromoberschwingungen einer Oberschwingungen erzeugenden Einrichtung (1) entspricht,
dadurch gekennzeichnet, daß
zum Erzeugen des eingeprägten Stroms Mittel zum Bilden eines Sollstroms (i_{VSOLL}) vorgesehen sind, die eine mit dem Versorgungsnetz verbundene, erste Bandpaßeinrichtung (11) zum Erzeugen einer oberschwingungsfreien Wechselspannung aufweisen,
sowie Mittel zum Erzeugen eines Sollwerts (-(Σiν)_{SOLL}) für die invertierte Summe der Stromoberschwingungen vorgesehen sind, die eine auf die Netzfrequenz abgestimmte, zweite Bandpaßeinrichtung (5) mit nachgeschalteter Inventiereinrichtung (6) aufweisen.

2. Oberschwingungskompensator nach Anspruch 1, dadurch gekennzeichnet, daß Signale zur Ansteuerung des selbstgeführten Stromrichters (3) von einem Zweipunktregler (Schmitt-Trigger 7) gebildet werden.

3. Oberschwingungskompensator nach Anspruch 1 oder 2, dadurch gekennzeichnet, daß die Mittel zum Erzeugen des Sollwertes für die Summe der Oberschwingungen so ausgebildet sind, daß ein über die zweite Bandpaßeinrichtung (5) höherer Ordnung gewonnenes, invertiertes Signal (-i₁) für die Grundschwingung von einem dem Gesamtstrom entsprechenden Signal (-(i₁+Σiν)) subtrahiert wird.

4. Oberschwingungskompensator nach einem der Ansprüche 1 bis 3, dadurch gekennzeichnet, daß die Mittel zum Bilden des Sollstroms so ausgebildet sind, daß der niederfrequente, sinusförmige Sollstrom mit Hilfe eines Multiplizierers (10) dadurch gewonnen wird, daß die oberschwingungsfreie Wechselspannung invertiert mit dem Ausgangssignal eines Pl-Reglers (9), der die Spannung am Kondensator (2) konstant hält, multipliziert wird.

## Claims

1. Electrical current harmonic compensator for a supply network, consisting of a capacitor (2), a self-commutated converter (3) and a choke coil (4), wherein a current impressed in the choke coil corresponds to an inverted sum of the current harmonics of a harmonic-generating device (1), characterised in that, to generate the impressed current, means for forming a nominal current (i_{νsoll}) are provided, comprising a first bandpass device (11) connected to the supply network for generating a harmonic-free a.c. voltage, as well as means for generating a nominal value (-(Σ_{iν})ₛₒₗₗ) for the inverted sum of the current harmonics comprising a second bandpass device (5) tuned to the mains frequency, with subsequent inverter device (6).

2. Harmonic compensator according to claim 1, characterised in that signals for driving the self-commutated converter (3) are formed by a flip-flop (Schmitt trigger 7).

3. Harmonic compensator according to claim 1 or 2, characterised in that the means for generating the nominal value for the sum of the harmonics are designed in such a way that an inverted signal (-i*v*) for the fundamental oscillation obtained by means of the second higher-order bandpass device (5) is subtracted from a signal ( (iv+Σiν)) corresponding to the total current.

4. Harmonic compensator according to any of claims 1 to 3, characterised in that the means for forming the nominal current are designed in such a way that the low-frequency sinusoidal nominal current is obtained by means of a multiplier (10) by the fact that the harmonic-free a.c. voltage in inverted form is multiplied by the output signal of a P1 controller (9) which keeps the voltage at the capacitor (2) constant.

## Revendications

1. Compensateur d'harmoniques du courant électrique pour un réseau d'alimentation, se composant d'un condensateur (2), d'un redresseur de courant auto-piloté (3) et d'une bobine de réactance (4), un courant appliqué à la bobine de réactance correspondant à une somme inversée des oscillations harmoniques de courant d'un dispositif (1) créant des oscillations harmoniques, caractérisé en ce que, pour créer le courant appliqué, sont prévus des moyens pour former un courant de consigne (i_{iνsoll}), moyens qui comportent un premier organe de bande passante (11) relié au réseau d'alimentation électrique, pour créer une tension alternative exempte d'oscillations harmoniques, ainsi que des moyens pour créer une valeur de consigne (-(Σ_{iν} )ₛₒₗₗ) pour la somme inversée des oscillations harmoniques de courant, ces derniers moyens comportant un deuxième organe de bande passante (5), déterminé par la fréquence du réseau avec un organe d'inversion (6) monté en aval.

2. Compensateur d'harmoniques selon la revendication 1, caractérisé en ce que des signaux pour commander le redresseur de courant auto-piloté (3) sont formés par un régulateur à deux positions (bascule de Schmitt 7).

3. Compensateur d'harmoniques selon la revendication 1 ou 2, caractérisé en ce que les moyens pour créer la valeur de consigne pour la somme des oscillations harmoniques sont réalisés de telle façon qu'un signal inversé (-i₁), obtenu par le deuxième dispositif de bande passante d'ordre plus élevé, pour la vibration de base d'un signal (-(i₁+Σ_{iν})) correspondant au courant total, soit soustrait.

4. Compensateur d'harmoniques selon l'une des revendications 1 à 3, caractérisé en ce que les moyens pour former le courant de consigne sont réalisés de telle façon que le courant de consigne de forme sinusoïdale et à basse fréquence soit récupéré à l'aide d'un multiplicateur (10), de telle sorte que la tension altemative exempte d'harmoniques et inversée avec le signal de sortie d'un régulateur PI (9) qui maintient la tension d'un condensateur (2) à une valeur constante, soit multipliée.
